(19)

Europäisches
Patentamt
European
Patent Office
Office européen
des brevets

(11) **EP 4 219 195 A1**

(12) **EUROPEAN PATENT APPLICATION**

(43) Date of publication:
**02.08.2023  Bulletin 2023/31**

(21) Application number: **22382064.8**

(22) Date of filing: **27.01.2022**

(51) International Patent Classification (IPC):
**B60C 11/24** $^{(2006.01)}$

(52) Cooperative Patent Classification (CPC):
**B60C 11/246;** B60C 2019/004

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Salcotech S.L.**
**36202 Vigo (ES)**

(72) Inventors:
• **SALINAS COSTA, Agustín Alberto**
**Vigo (ES)**

• **BARREIROS PRADA, Francisco**
**Ourense (ES)**
• **BLANCO CARBALLO, Raquel**
**Vigo (ES)**
• **BARROS VILLAR, Carlos**
**Ourense (ES)**
• **FERNÁNDEZ SUÑER, Octavio**
**Madrid (ES)**

(74) Representative: **Clarke Modet & Co.**
**C/ Suero de Quiñones 34-36**
**28002 Madrid (ES)**

Remarks:
Amended claims in accordance with Rule 137(2)
EPC.

(54) **DEVICE AND METHOD FOR REAL-TIME TYRE WEAR MEASUREMENT**

(57)    The invention discloses a device (1) for measuring tyre wear comprising an ultrasound emitter (2) and an ultrasound receiver (3) such that, by means of the emission by the emitter (2) of an ultrasound wave through a material of the tyre (10) and the reception by the receiver (3) of said wave after bouncing against the rolling surface (SR), a distance between the inner face (10i) and the rolling surface (SR) of the outer face (10e) is obtained. The invention further discloses a tyre comprising said device (1), as well as a method for measuring tyre wear using said device (1).

FIG. 2

EP 4 219 195 A1

## Description

## OBJECT OF THE INVENTION

The present invention belongs to the field of tyre condition monitoring in the automotive industry.

A first object of the present invention is a device designed for measuring tyre wear in real time.

A second object of the present invention is a method the previous device can carry out for measuring tyre wear in real time.

## PRIOR ART

Current automobiles have more and more sensors intended to measure relevant parameters for a correct operation. The information provided by these sensors is shown to the driver by means of a control interface provided inside the cabin, for example by means of light indicators or sound alarms. The driver can thus take the necessary measures depending on the data provided by the sensors. Alternatively, the information of the sensors may be sent to a remote location, for example a control centre controlling a fleet of vehicles, thereby enabling a better management of maintenance tasks.

In this context, TPMS (Tyre Pressure Monitoring System) are widely known from years ago. The main elements making up a TPMS are a pressure sensor and a temperature sensor connected by means of a processing means having communication capabilities. The communication means may in principle by of any kind as long as it provides for the transmission of the information obtained by the sensors in a secure and reliable manner. For example, radiofrequency or, in recent years, IoT technology are commonly employed for this purpose. These elements are embedded in an electronic board for making up a single small-size part that is installed inside the tyre or at the air valve of the vehicle. Thanks to this configuration, the sensors obtain in real time tyre pressure and temperature, and this information is sent outside for analysis. For example, the information about pressure and temperature can be sent to a control means of the vehicle, which then sends the data to the driver through the control board of the vehicle (for example, an indicator may be lit when the pressure or temperature are anomalous). Alternatively, the pressure and temperature information may be sent to a remote location, for example to the cloud, for analysis in a control centre located remotely.

TPMS systems are very useful, since they provide pressure and temperature of each of the tyres in real time. The driver or vehicle manager can thereby take the necessary decisions for maintaining the tyres in good condition. However, a drawback of TPMS systems is that they do not measure perhaps the most important tyre parameter: tread depth.

Indeed, it is well known that many traffic accidents are nowadays caused by circulating using worn tyres not replaced in due time. When a tyre wears out, the tread is lost, grip is reduced, and accident probability significatively increases, particularly under bad weather conditions. However, monitoring the condition of the tyres in a vehicle nowadays depends on a person, usually the driver, periodically inspecting the tyres visually. Most vehicles circulating with worn out tyres are due to oversight or carelessness of the driver. Furthermore, in the particular case of heavy vehicles having two tyres at each side, it is almost impossible to correctly inspecting the innerside back axis tyres.

While some devices for determining the tread depth of a vehicle tyre are known, these devices are external to the vehicle itself. For example, systems having an optical laser provided on the ground for determining tread depth as the vehicle passes over them are known.

In conclusion, there still exists in this field a need for a device integrated in the vehicle and capable of automatically providing information about the condition of tyre tread.

## DESCRIPTION OF THE INVENTION

The present invention solves the aforementioned drawbacks thanks to a device and a method particularly designed for real-time measuring of tyre wear. An ultrasound emission/reception system configured to be attached to the inner face of the tyre is provided therefor. Furthermore, in a similar manner as the tyre pressure and temperature information provided by conventional TPMS, the device of the invention may send the wear information to a control means of the vehicle or to a remote location for a suitable management of tyre wear. In fact, when the device of the invention further comprises pressure and temperature sensors, it is *de facto* an improved TPMS with respect to conventional TPMS.

It is important to note that the device of the present invention is autonomous and automatic. That is, it is autonomous in the sense that it is programmable, such that the tyre wear measurements take place without the need for any specific command, and it is automatic in the sense that the tyre or the sensor do not need to be manipulated for the device to carry out the measurement.

Next, the device of the invention, a tyre including the device of the invention, and a method for measuring tyre wear by means of the device of the invention, are disclosed in further detail

## Tyre wear measurement device

A first aspect of the present invention is directed to a device for real-time measuring tyre wear. As mentioned above, the tyre comprises an inner face and an outer face and, in turn, the outer face comprises a tread formed by a number of grooves recessed with respect to a rolling surface of the tyre. Now, the device of the invention is advantageous in that it comprises an ultrasound emitter and an ultrasound receiver, and it is configured for attaching to the inner face of the tyre in a position where an emission end of the ultrasound emitter and a receiving end of the ultrasound receiver face a portion of the rolling surface where there is no recess. Thus, by emitting by means of the emitter an ultrasound wave through a material making up the tyre and receiving by means of the receiver said wave after bouncing on the rolling surface, a distance between the inner face and the rolling surface of the outer face is obtained. While this distance does not directly amount to the tread depth, it can be obtained in a direct and simple manner just by subtracting the obtained distance from the distance between the bottom of a groove and the inner face of the tyre.

This configuration is advantageous because it allows for obtaining tyre wear in an automatic manner, and thereby the driver or the person responsible for the vehicle condition can be warned when the tread is excessively worn.

In principle, the ultrasound wave may have any frequency provided it can suitably pass through the tyre material from the inner face to the outer face. In particular, devices for measuring rubber thickness based on ultrasound emission at frequencies of several gigahertz, for example between 2 GHz and 3 GHz, are known. However, the inventors of the present application experimentally found that these frequencies are not suitable for measuring tyre thickness due to the fact that tyres have a reinforcement metal mesh that prevent the ultrasound waves from passing through. Indeed, at the aforementioned frequencies, ultrasound waves cannot pass through the metal mesh, bouncing against it instead. To solve this problem, the inventors of the present application found that the ultrasound frequency needs to be much lower, between 100 MHz and 500 MH, the best results taking place between 200 MHz and 300 MHz. Therefore, according to a particularly preferred embodiment of the invention, the ultrasound emitter and receiver are respectively configured for emitting and receiving ultrasound waves at frequencies of between 100 MHz and 500 MHz, more preferably between 200 MHz and 300 MHz.

As mentioned above, this configuration is advantageous because it allows the device of the invention to be employed in tyres having a reinforcement metal mesh.

The emitter and receiver may have a number of different configurations although, according to a particularly preferred embodiment of the invention, the emission end of the ultrasound emitter and the receiving end of the ultrasound receiver are positioned at an attachment face of the device to the tyre. The attachment face of the device is that through which the device of the invention is attached to the tyre, and its shape may be adapted to the inner curvature of the tyre. Furthermore, the attachment face may comprise attachment means such as chemical adhesives or the like. Thereby, when the device of the invention is attached to the inner face of the tyre, the emission and reception ends respectively of the emitter and the receiver are in direct contact with said inner face of the tyre, such that the ultrasound wave emitted by the emitter enters directly into the tyre material.

This configuration is advantageous in that the measurement results are more precise, since the need of the ultrasound wave to pass through an air-tyre material interface is prevented.

On the other hand, the emitter and the receiver may be positioned anywhere in the device provided that the signal sent by the emitter can be correctly received by the receiver. However, according to a particularly preferred embodiment of the invention, the ultrasound emitter and the ultrasound receiver are adjacent one to the other.

This configuration is advantageous in that the precision of the measurement is enhanced and it further allows for obtaining a particularly compact device.

Preferably, the device of the invention further comprises a pressure sensor and a temperature sensor. These sensors may be of any type and be positioned anywhere in the device provided they obtain temperature and pressure inside the tyre. For example, similar pressure and temperature sensors as those used in conventional TPMS can be employed.

This configuration is advantageous in that complete information in connection to the condition of the tyres is obtained, including pressure, temperature and level of wear. This information alone is enough for determining a moment when maintenance or replacement of the tyres is needed.

According to still another preferred embodiment, the device of the invention further comprises a communication means. The communication means can be of any type provided that the information about tyre wear and, if necessary, the temperature and pressure inside the tyre, can be transmitted to a control means of the vehicle or to a remote location. Just as an example, the communication means can be based on IoT technology, including Bluetooth, Wifi, Zigbee, NFC, UMTS, GPRS, GSM, 3G, 4G, 5G communication technologies, o any other suitable technology for establishing the communication mentioned above.

**Tyre having the above disclosed device**

The present invention is also directed to a tyre having the device disclosed in the above paragraphs, where said device is attached by means of its attachment face to the inner face of the tyre in a position facing a portion of the rolling surface where there is no groove. A tyre of this type would be ready to be installed in the vehicle and used as an intelligent tyre.

**Method for measuring tyre wear**

The invention further discloses a method for real-time measuring tyre wear using a device as disclosed in the previous paragraphs. Obviously, before carrying out the method, the device needs to be attached to the inner face of the tyre in a position facing a portion of the rolling surface where there is no groove. The method comprises the following steps:

1. Emitting, by means of the ultrasound emitter, an ultrasound wave through the tyre material. The emission direction is essentially perpendicular to the inner face of the tyre, such that the distance travelled by the wave through the tyre material is minimized and, at the same time, the necessary calculations are made simpler.

2. Receiving, by means of the ultrasound receiver, said ultrasound wave after bouncing on the rolling surface.

3. Determining, based on the time of flight of the ultrasound wave and on a transmission speed of the ultrasound wave through the tyre material, a distance between the inner face and the rolling surface of the outer face. The determination of said distance is carried out by means of calculations generally known in this field.

According to the above, the result of this method is not directly the most employed parameter for determining tyre wear in a vehicle, namely tread depth. However, tread depth can be obtained in several manners from the information provided by the present device. For example, the current tread depth can be obtained simply by subtracting the wear (obtained, for example, subtracting an initial depth of the tyre from the actual depth in a particular moment) from the initial tread depth. Alternatively, it would be possible to use two devices of the type disclosed above, one of them positioned at a location on the inner face facing a portion of the rolling surface where there is no groove, and the other one positioned at a location on the inner face facing the bottom of a groove. The tread depth is directly the difference between the distance obtained by both devices.

In any case, the device of the invention can carry out this method periodically for determining the tyre condition in real time. Furthermore, obtaining this information in real time allows for analysing the wear speed of the tyres depending on other factors connected to the driving style or the weather for obtaining patterns allowing for the driver to extend the useful life of the vehicles.

According to a particularly preferred embodiment of the invention, the ultrasound wave has a frequency of between 100 MHz and 500 MHz, more preferably between 200 MHz and 300 MHz. As mentioned before, this frequency range ensures that the wave passes through a metal mesh such as that included as a reinforcement in many tyres.

Lastly, according to still another preferred embodiment, the ultrasound wave is emitted essentially in perpendicular to the inner face of the tyre. This configuration minimises the distance travelled by the wave and allows for obtaining more accurate results.

## BRIEF DESCRIPTION OF THE DRAWINGS

Fig. 1 shows a schematic diagram of the main components of an exemplary device according to the invention.
Fig. 2 shows an exemplary device according to the present invention attached to the inner face of a tyre.

## PREFERRED EMBODIMENT OF THE INVENTION

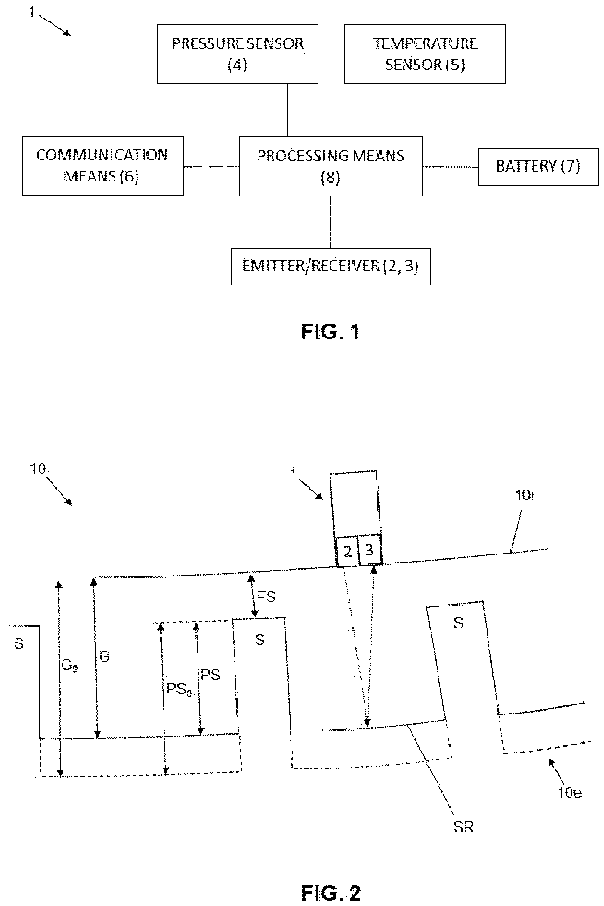

Fig. 1 shows a schematic diagram of a device (1) according to the present invention. As shown, the device (1) comprises a processing means (8) connected to an ultrasound emitter/receiver (2, 3), a pressure sensor (4), a temperature sensor (5), a communication means (6), and a battery (7).

The processing means (8) can be of any kind provided it can suitably control the rest of elements in the manner disclosed in this document. For example, the processing means can be a microcontroller, a microprocessor, a SoC (System on Chip), an ASIC (Application Specific Integrated Circuit), a DSP (Digital Signal Processor), an FPGA (Field Programmable Gate Array), or any other similar component having a suitable number of in/out ports and enough computation capacity.

The emiter/receiver (2, 3) in this example is shown as a single element, since in the distance measurement field components integrating both elements for measuring distances using the method disclosed in this document are known. However, the emitter/receiver (2, 3) could be implemented in different ways, in particular by means of two separate elements suitably positioned. In particular, the emission end of the emitter (2) and the reception end of the receiver (3) are positioned flush at a face of the device (1) configured to be attached to the inner surface (10i) of the tyre (10), as shown in Fig. 2.

The pressure sensor (4) and the temperature sensor (5) may be similar to those conventionally employed in known TPMS's. Their function is to provide a measurement of the pressure and temperature inside the tyre.

The communication means (6) can be of any type provided it allows for the communication between the device (1), which in use is attached inside the tyre (10), and the vehicle control means or a remote location such as a control centre for a fleet of vehicles. The communication means (6) is, therefore, based on a technology suitable for each application, including, for example, IoT technology, Bluetooth, Wifi, Zigbee, NFC, UMTS, GPRS, GSM, 3G, 4G, 5G, and others. Note that, depending on the type of processing means (8) employed, the communication means (6) may be integrated in the processing means (8) itself. In this context, it is irrelevant if both elements are integrated in a single component or if they make up separate components.

The battery (7) can be of any type provided it can provide the device (1) with enough energy throughout all its useful life.

Fig. 2 shows the device (1) of the invention fixed to the inner face (10i) of a tyre (10). As shown, the device (1) of the invention has an attachment face where the emission and reception ends respectively of the emitter (2) and the receiver (3) are positioned. That is, both ends are flush on an essentially flat face configured for attachment to the inner face (10i) of the tyre (10), for example by means of adhesive or the like. Naturally, to prevent the ultrasound wave to be affected by the adhesive, the attachment face has an emission/reception portion where the emitter (2) and receiver (3) emission and reception ends are positioned, and an attachment portion (not shown in the figure) separate from the above disclosed portion where the adhesive for attaching the device (1) to the tyre (10) is provided.

The emitter (2) sends an ultrasound wave essentially in perpendicular to the inner face (10i) of the tyre (10), and this wave passes through the material making up the tyre (10), bounces against the interface with air made up by the rolling surface (SR) and returns again to the receiver (3) positioned next to the emitter (2). The device (1) determines the time of flight of the ultrasound wave and, knowing the transmission speed of the ultrasound wave within the material making up the tyre, it is possible in a known manner to easily determine the distance travelled. The current thickness (G) of the tyre (10), that is, the distance between the inner face (10i) and the rolling surface (SR) of the outer face (10e), is half the distance travelled by the ultrasound wave.

Once the current thickness (G) is known, there are different ways to obtain the depth (PS) of the grooves (S) making up the tread on the outer face (10e) of the tyre (10). For example, if the initial thickness (Go) of the tyre (10) is known, it is possible to determine any time the wear of the tyre (10) by subtracting (Go) - (G). The initial thickness (Go) can be obtained, for example, by carrying out a first measurement of the tyre (10) thickness before it is used for the first time, or just at the moment when it is first used. Thereby, the groove depth (PS) at any given moment is the initial depth of the groove (PSo), known for each tyre model, minus the wear calculated by the device (1) of the invention. That is:

$$PS = PS_0 - [(G_0) - (G)]$$

Alternatively, it is also possible to use two devices (1) like the one disclosed in the present document. A first device (1) would be installed at the position shown in Fig. 2, and it would allow for obtaining the current thickness (G) at any given moment. A second device (1) would be installed in a position on the inner face (10i) facing a groove (S). Therefore, the ultrasound wave sent would bounce on the bottom of the groove (S), thereby providing the distance between the inner face (10i) and the bottom of the groove (S) (this distance is referred to herein as FS). According to this configuration, the current groove depth (PS) at any given moment would be obtained by subtracting the total thickness (G) from said distance (FS):

$$PS = G - FS$$

In any case, it is easy to see that the device (1) of the invention provides information from which the tyre wear can be obtained by simple calculations.

**Claims**

1. Device (1) for real-time tyre wear measurement, where the tyre (10) comprises an inner face (10i) and an outer face (10e), and where the outer face (10e) comprises a tread formed by a plurality of grooves (S) recessed with respect to a rolling surface (SR),

   **characterized by** comprising an ultrasound emitter (2) and an ultrasound receiver (3), and in that the device (1) is configured for attaching to the inner face (10i) of the tyre (10) in a position where an emission end of the ultrasound emitter (2) and a reception end of the ultrasound receiver (3) are facing a portion of the rolling surface (SR) where there is no groove (S), such that, by means of the emission by the emitter (2) of an ultrasound wave through a material of the tyre (10) and the reception by the receiver (3) of said wave after bouncing on the rolling surface (SR), a distance between the inner face (10i) and the rolling surface (SR) of the outer face (10e) is obtained.

2. Device (1) according to claim 1, where the ultrasound emitter (2) and receiver (3) are respectively configured for emitting and receiving ultrasound at frequencies of between 100 MHz and 500 MHz.

3. Device (1) according to claim 2, where the ultrasound emitter (2) and receiver (3) are respectively configured for emitting and receiving ultrasound at frequencies of between 200 MHz and 300 MHz.

4. Device (1) according to any of the previous claims, where the emission end of the ultrasound emitter (2) and the reception end of the ultrasound receiver (3) are positioned at an attachment face of the device to the tyre (10).

**5.** Device (1) according to any of the previous claims, where the ultrasound emitter (2) and the ultrasound receiver (3) are adjacent one to the other.

**6.** Device (1) according to any of the previous claims, further comprising a pressure sensor (4) and a temperature sensor (5).

**7.** Device (1) according to any of the previous claims, further comprising a communication means (6).

**8.** Tyre (10) comprising a device (1) according to any of claims 1-7, where said device (1) is attached through its attachment face to the inner face (10i) of the tyre (10) at a position facing a portion of the rolling surface (SR) where there is no groove (S).

**9.** Method for real-time tyre wear measurement by means of a device (1) according to any of claims 1-7, where the device (1) is attached to the inner face (10i) of the tyre (10) at a position facing a portion of the rolling surface (SR) where there is no groove (S), **characterized by** comprising the following steps:

- emitting, by means of the ultrasound emitter (2), an ultrasound wave through a material of the tyre (10);
- receiving, by means of the ultrasound receiver (3), said ultrasound wave after bouncing on the rolling surface (SR); and
- determining, from the time of flight of the ultrasound wave and a transmission speed of the ultrasound wave through the material of the tyre (10), a distance between the inner face (10i) and the rolling surface (SR) of the outer face (10e).

**10.** Method according to claim 9, where the ultrasound wave has a frequency of between 100 MHz and 500 MHz.

**11.** Method according to claim 10, where the ultrasound wave has a frequency of between 200 MHz and 300 MHz.

**12.** Method according to any of claims 9-1, where the ultrasound wave is emitted essentially in perpendicular to the inner face (10i) of the tyre (10).

**Amended claims in accordance with Rule 137(2) EPC.**

**1.** Device (1) for real-time tyre wear measurement, for a tyre (10) comprising an inner face (10i) and an outer face (10e), the outer face (10e) comprising a tread formed by a plurality of grooves (S) recessed with respect to a rolling surface (SR), comprising an ultrasound emitter (2) and an ultrasound receiver (3),
the device (1) being configured for attaching to the inner face (10i) of the tyre (10), such that, by means of the emission by the emitter (2) of an ultrasound wave through a material of the tyre (10) and the reception by the receiver (3) of said wave after bouncing on the rolling surface (SR), a distance is obtained, **characterized in that** the ultrasound emitter (2) and receiver (3) are respectively configured for emitting and receiving ultrasound at frequencies of between 100 KHz and 500 KHz.

**2.** Device (1) according to claim 1, where the ultrasound emitter (2) and receiver (3) are respectively configured for emitting and receiving ultrasound at frequencies of between 200 KHz and 300 KHz.

**3.** Device (1) according to any of the previous claims, where the emission end of the ultrasound emitter (2) and the reception end of the ultrasound receiver (3) are positioned at an attachment face of the device to the tyre (10).

**4.** Device (1) according to any of the previous claims, where the ultrasound emitter (2) and the ultrasound receiver (3) are adjacent one to the other.

**5.** Device (1) according to any of the previous claims, further comprising a pressure sensor (4) and a temperature sensor (5).

**6.** Device (1) according to any of the previous claims, further comprising a communication means (6).

**7.** Tyre system (10) **characterized by** comprising a device (1) according to any of claims 1-6, where said device (1) is attached through its attachment face to the inner face (10i) of the tyre (10) at a position where an emission end of the ultrasound emitter (2) and a reception end of the ultrasound receiver (3) are facing a portion of the rolling surface (SR) where there is no groove (S) such that, by means of the emission by the emitter (2) of an ultrasound wave through a material of the tyre (10) and the reception by the receiver (3) of said wave after bouncing on the rolling surface (SR) of the tyre (10), a distance between the inner face (10i) and the rolling surface (SR) of the outer face (10e) is obtained.

**8.** Method for real-time tyre wear measurement by means of a device (1) according to any of claims 1-6, where the device (1) is attached to the inner face (10i) of the tyre (10) at a position facing a portion of the rolling surface (SR) where there is no groove (S), comprising the following steps:

- emitting, by means of the ultrasound emitter (2), an ultrasound wave through a material of the tyre (10);

- receiving, by means of the ultrasound receiver (3), said ultrasound wave after bouncing on the rolling surface (SR); and

- determining, from the time of flight of the ultrasound wave and a transmission speed of the ultrasound wave through the material of the tyre (10), a distance between the inner face (10i) and the rolling surface (SR) of the outer face (10e)

**characterized in that** the ultrasound wave has a frequency of between 100 KHz and 500 KHz.

9. Method according to claim 8, where the ultrasound wave has a frequency of between 200 KHz and 300 KHz.

10. Method according to any of claims 8-9, where the ultrasound wave is emitted essentially in perpendicular to the inner face (10i) of the tyre (10).

**FIG. 1**

**FIG. 2**

Europäisches Patentamt

European Patent Office

Office européen des brevets

# EUROPEAN SEARCH REPORT

Application Number

EP 22 38 2064

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 572 245 A1 (CONTINENTAL REIFEN DEUTSCHLAND GMBH [DE]) 27 November 2019 (2019-11-27) | 1,4,7-9, 12 | INV. B60C11/24 |
| Y | * abstract; claims 1-6; figure 1 * | 5,6,8 | |
| A | | 2,3,10, 11 | |
| | ----- | | |
| X | DE 10 2015 117024 A1 (INFINEON TECHNOLOGIES AG [DE]) 6 April 2017 (2017-04-06) | 1,4-7,9, 12 | |
| Y | * abstract; claims 11-13; figures 1,2 * | 5,6,8 | |
| A | | 2,3,10, 11 | |
| | ----- | | |

TECHNICAL FIELDS SEARCHED (IPC)

B60C

The present search report has been drawn up for all claims

| Place of search | Date of completion of the search | Examiner |
|---|---|---|
| Munich | 15 June 2022 | Gaillard, Alain |

EPO FORM 1503 03.82 (P04C01)

## ANNEX TO THE EUROPEAN SEARCH REPORT
## ON EUROPEAN PATENT APPLICATION NO.

EP 22 38 2064

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2022

| Patent document cited in search report | Publication date | Patent family member(s) | Publication date |
|---|---|---|---|
| EP 3572245 A1 | 27-11-2019 | DE 102018208107 A1<br>EP 3572245 A1 | 28-11-2019<br>27-11-2019 |
| DE 102015117024 A1 | 06-04-2017 | DE 102015117024 A1<br>US 2017097223 A1 | 06-04-2017<br>06-04-2017 |

EPO FORM P0459

For more details about this annex : see Official Journal of the European Patent Office, No. 12/82